# EUROPEAN PATENT APPLICATION

(11) **EP 3 683 554 A1**
(43) Date of publication of application: **22.07.2020**
(21) Application number: 19212206.7
(22) Date of filing: 28.11.2019
(51) Int. Cl.: G01F 1/66, G01F 15/18

(54) **A FLOW-RATE MEASURING TUBE FOR AN ULTRASONIC FLOW METER; A TRANSFUSION TUBE WITH THE FLOW-RATE MEASURING TUBE; AND AN ULTRASONIC FLOW-RATE MEASURING SYSTEM**

(30) Priority: 15.01.2019 JP 2019004576
(71) Applicant: Honda Electronics Co., Ltd., Toyohashi-shi, Aichi 441-3193 (JP)
(72) Inventor: NAGAREDA, Kenji, Toyohashi-shi, Aichi 4413193 (JP)
(74) Representative: Dennemeyer & Associates S.A.

(57) **Abstract**

This invention provides a flow-rate measuring tube for an ultrasonic-flow meter that is easy to produce and makes possible accurate ultrasonic measurements.

A flow-rate measuring tube 21 is provided halfway on a transfusion tube 2 for measuring the liquid-flow rate based on the difference in the propagation time of ultrasonic waves being emitted and received between a pair of ultrasonic sensors. The flow-rate measuring tube 21 includes a pair of L-shaped tube connectors 24 and 25 and a connecting tube 26 that connects the L-shaped tube connectors 24 and 25 to each other. The connecting tube 26 is elastic. The L-shaped tube connectors 24, 25 respectively comprise a straight-pipe portion 72 onto which the end portions of the connecting tube 26 are connected. A base-end surface 73 of the straight-pipe portion 72 is a surface to be pressed against the pair of ultrasonic sensors. Conversely, a clearance S1 is provided between the base-end surfaces 74 of the straight-pipe portions 72 of the pair of L-shaped tube connectors 24, 25pp.

## Description

### Technical Field

0001 This invention refers to a flow-rate measuring tube for an ultrasonic flow meter; a transfusion tube with the flow-rate measuring tube; and an ultrasonic flow-rate measuring system comprising the transfusion tube with the flow-rate measuring tube and comprising the ultrasonic flow meter.

### Technical Background

0002 Conventionally, various ultrasonic-flow meters that measure the flow rate of liquid have been proposed as measuring devices using ultrasonic waves. These types of ultrasonic-flow meters have a flow-rate measuring tube provided halfway on the transfusion tube through which the liquid flows, and ultrasonic sensors are respectively installed at an upper-stream position and at a lower-stream position of the flow-rate measuring tube. These ultrasonic sensors are used to transmit and receive ultrasonic waves, and the flow rate of the liquid is calculated based on the difference between the propagation time of the ultrasonic waves propagating from the upper-stream side to the lower-stream side and the propagation time of the ultrasonic waves propagating from the lower-stream side to the upper-stream side. Patent Document 1 shows a structure comprising a flow-rate measuring tube and shows a holder to which the flow-rate measuring tube is attached at the time of measuring the flow rate, and it shows the flow-rate measuring tube as being disposable. Patent Document 2 refers to a technology showing a flow-rate measuring tube made of a pair of L-shaped bent tubes (an inlet conduit and an outlet conduit) linked by a connecting tube and shows the use of a pair of oppositely placed ultrasonic sensors being respectively pressed against the bent tubes on the upper stream and on the lower stream.

### Prior Art Documents

### Patent Documents

0003 Patent Document 1: U. S. Patent No. 5463906, Specification (FIGS. 1 to 6, etc.)
Patent Document 2: Japanese Patent No. 4991963 (FIGS. 1 to 3, etc.)

### Summary of the Invention

### Problems to be solved by the Invention

0004 The conventional art as described in Patent Document 1 refers to a flow-rate measuring tube of which part, equivalent to a connecting tube, is stored in a cavity of a holder and of which part, equivalent to the bent tubes being pressed by the ultrasonic sensor, are integrally formed by the use of common parts. Thus, it is hard to produce such a flow-rate measuring tube, so it is unsuitable for mass production.

0005 Of the conventional arts as described in Patent Document 2, it is seen that the adhesion between the flow-rate measuring tube and the ultrasonic sensor may be insufficient when the two are being pressed against each other during measuring a flow. If the flow-rate measuring tube moves from the correct position, or if there is a clearance between the ultrasonic sensor and the bent tubes, sensitivity of the ultrasonic sensor deteriorates, thus causing the problem of an ultrasonic measurement not being able to be done accurately.

0006 This invention was made in the light of the above-mentioned problems. The aim of this invention is to provide a flow-rate measuring tube for an ultrasonic-flow meter that is easy to produce and one that makes possible an accurate ultrasonic measurement. Another aim of this invention is to provide a transfusion tube with the preferable flow-rate measuring tube, as mentioned above, and to provide an ultrasonic-flow measuring system.

### Means to solve the problems

0007 To solve the above-mentioned problems, the first aspect of this invention refers to a flow-rate measuring tube provided halfway on a transfusion tube for the use of measuring the liquid-flow rate based on the difference in the propagation time of the ultrasonic waves that are emitted and received between the pair of ultrasonic sensors, characterized in that the flow-rate measuring tube is made of a pair of L-shaped tube connectors and of a connecting tube to connect the pair of L-shaped tube connectors; thereof the connecting tube has an elasticity with a pair of L-shaped tube connectors respectively having a straight-pipe portion to be connected to the end of the connecting tube; and the base-end surface of the straight-pipe portion of the pair of L-shaped tube connectors is a surface to be pressed against the pair of ultrasonic sensors, and a clearance is formed between the front-end surfaces of the straight-pipe portion of the pair of L-shaped tube connectors.

0008 Therefore, the first aspect of this invention allows for the flow-rate measuring tube to have a structure of which a pair of L-shaped tube connectors are connected to each other by a connecting tube, thus making it possible to produce the flow-rate measuring tube easily at a comparatively low cost by using e.g. commercially available ones as L-shaped tube connectors.

0009 Also, the first aspect of this invention allows for a pair of L-shaped tube connectors to be connected to each other by a connecting tube and for the front-end surface of the straight-pipe portion of each L-shaped tube connector to be separated from the other. When compressing the flow-rate measuring tube in the axial direction against the elasticity of the connecting tube, the connecting tube is compressed and the front-end surfaces of the straight-pipe portions of both L-shaped tube connectors make contact with the other, thus generating a biasing force for compressing the base-end surface of the straight-pipe portion against the ultrasonic sensor. As such, the adhesion between the flow-rate measuring tube and the ultrasonic sensor increases, thus preventing the problem of the flow-rate measuring tube being out of the correct position or the problem of a clearance being made between the ultrasonic sensor and the L-shaped tube connector, thus making it possible to propagate efficiently the ultrasonic waves within the flow-rate measuring tube. Therefore, the sensitivity of the ultrasonic sensor increases, thus making it possible to do an accurate ultrasonic measurement.

0010 The second aspect of this invention refers to a flow-rate measuring tube according to the first aspect of this invention, characterized in that the L-shaped tube connector has a through-hole to form a pathway for the liquid flow and has a fitting hole that communicates to the through-hole, and that the end of the connecting tube is internally fitted.

0011 Therefore, according to the second aspect of the present invention, the connecting tube is connected to the L-shaped tube connector by internally fitting the end of the connecting tube into the fitting hole of the L-shaped tube connector. As a result, since at least the end of the connecting tube is protected by the L-shaped tube connector, the connecting tube can be prevented from being damaged or broken. Moreover, the outer diameter of the connection pipe becomes smaller than in the case thereof the end of the connecting tube is externally fitted onto the straight-pipe portion of the L-shaped tube connector. For this reason, it is possible to reduce the installation space of the flow-rate measuring tube, thus reducing the size of the ultrasonic-flow meter.

0012 The third aspect of this invention refers to a flow-rate measuring tube according to the second aspect of this invention, characterized in that the fitting hole is tapered such that the inner diameter of the fitting hole gradually increases toward the open end of the fitting hole.

0013 The third aspect of this invention allows for a force to be gradually added to the outer periphery of the end of the connecting tube, as the end of the connecting tube is inserted into the fitting hole. As such, the connecting tube can be easily fitted into the fitting hole even if the connecting tube is easily deformed due to its elasticity. Also, when inserting the end of the connecting tube into the fitting hole, a force is placed onto the inner periphery of the fitting hole to the outer periphery of the connecting tube, thus making it easy to compress the connecting tube.

0014 The fourth aspect of this invention refers to a flow-rate measuring tube according to the second or third aspect of this invention, characterized in that a stepped surface is formed on the connection between the through-hole and the fitting hole, so that the open end of the connecting tube that is fitted into the fitting hole makes contact with the stepped surface.

0015 As such, the fourth aspect of this invention allows for the open end of the connecting tube that is fitted into the fitting hole to make contact with the stepped surface, thus allowing the stepped surface to be made smaller, so as to be formed on the connection of the inner wall of the through-hole and of the inner wall of the connecting tube, thus making it possible to prevent the liquid that is flowing through the through-hole into the connecting tube from being retained around the open end of the connecting tube. Also, in making the open end of the connecting tube to make contact with the stepped surface, a force is generated from the stepped surface against the open end of the connecting tube, thus making it easier to compress the connecting tube.

0016 The fifth aspect of this invention refers to a flow-rate measuring tube according to the first aspect of this invention, characterized in that the end of the connecting tube is externally fitted onto the straight-pipe portion.

0017 As such, the fifth aspect of this invention allows for the end of the connecting tube to be externally fitted into the straight-pipe portion of the L-shaped tube connector, thus connecting the connecting tube to the L-shaped tube connector. Then, the end of the connecting tube is internally supported by the straight-pipe portion of the L-shaped tube connector, thus making it easier to fit the end of the connecting tube into the straight-pipe portion of the L-shaped tube connector.

0018 The sixth aspect of this invention refers to a flow-rate measuring tube according to the fifth aspect of this invention, characterized in that the straight-tube portion is tapered such that the outer diameter of the straight-pipe portion gradually decreases toward the front end of the straight-tube portion.

0019 As such, the sixth aspect of this invention allows for the end of the connecting tube to be gradually pressed and expanded from the inside as the end of the connecting tube is being externally fitted onto the straight-pipe portion. Then, it is unnecessary to press and spread the end of the connecting tube manually when making the end of the connecting tube to be externally fitted onto the straight-pipe portion, thus making it possible easily to connect the connecting tube to the straight-pipe portion.

0020 The seventh aspect of this invention refers to a flow-rate measuring tube according to any one of the first to through sixth aspects of this invention, characterized in that in the state of the flow-rate measuring tube being compressed in the axial direction against the elasticity of the connecting tube, the ends of the straight-pipe portion of the pair of L-shaped tube connectors connect together, thus generating a biasing force for compressing the base-end surface of such straight-pipe portion against the ultrasonic sensor.

0021 As such, the seventh aspect of this invention makes it possible to generate (whenever the flow-rate measuring tube is compressed in the axial direction against the elasticity of the connecting tube) the biasing force to compress the base-end surface of the straight-pipe portion of the L-shaped tube connector against the ultrasonic sensor, thus increasing the adhesion between the flow-rate measuring tube and the ultrasonic sensor. Moreover, as both ends of the straight-pipe portion of the L-shaped tube connector make contact with each other, it is possible then to connect straightly both of the straight-pipe portions, thus fixing such a state of both ends staying in the correct position. As a result, the ultrasonic waves having directivity is surely propagated within the flow-rate measuring tube, which further improves ultrasonic sensitivity, thus making it possible to measure more accurately the ultrasonic waves.

0022 The eighth aspect of this invention refers to a flow-rate measuring tube according to any one of the first through seventh aspects of this invention, characterized in that a fitting-protruded portion is formed at the head of the outer periphery of the straight-pipe portion of one of the L-shaped tube connectors and a fitting-recessed portion is provided at the head of the outer periphery of the straight-pipe portion of the other L-shaped tube connector, so that the fitting-protruded portion is fitted to the-fitting-recessed portion.

0023 As such, the eighth aspect of this invention allows for the pair of L-shaped tube connectors to be relatively positioned by fitting the fitting-protruded portion into the fitting-recessed portion, which prevents both of the L-shaped tube connectors from being out of the correct position in the peripheral direction, thus preventing the connecting tube that connects both of the L-shaped tube connectors from being distorted.

0024 The ninth aspect of this invention refers to a transfusion tube with a flow-rate measuring tube, according to any one of the first through eighth aspects of this invention, characterized in that a flow-rate measuring tube is provided halfway on the transfusion tube.

0025 As such, the ninth aspect of this invention allows for the pair of L-shaped tube connectors constituting the flow-rate measuring tube to be respectively connected by the connecting tube constituting the flow-rate measuring tube, as well, and for each head of the straight-pipe portion of both L-shaped tube connectors to be separated. If the flow-rate measuring tube is compressed in the axial direction against the elasticity of the connecting tube, then the connecting tube is compressed, so that both heads of the straight-pipe portion of both of the L-shaped tube connectors make contact with each other, and the base-end surface of the straight-pipe portion is compressed against the ultrasonic sensor, thus generating the biasing force. Thus, the adhesion between the flow-rate measuring tube and the ultrasonic sensor is improved, thus preventing the problem of the flow-rate measuring tube being out of the correct position or the problem of a clearance existing between the ultrasonic sensor and the L-shaped tube connector. As such, the ultrasonic waves can be efficiently propagated within the flow-rate measuring tube, thus improving the ultrasonic sensitivity. As a result, a transfusion tube with a preferable flow-rate measuring tube can be achieved, making it possible then to measure more accurately the ultrasonic waves.

0026 The 10th aspect of this invention refers to an ultrasonic flow-rate measuring system, characterized in comprising a transfusion tube with a flow-rate measuring tube, according to the ninth aspect of this invention, and an ultrasonic-flow meter that measures the liquid-flow rate based on the difference in the propagation time of the ultrasonic waves that are being emitted and received between the pair of ultrasonic sensors oppositely placed on the upper-stream and on the lower-stream positions of the flow-rate measuring tube.

0027 As such, the 10th aspect of this invention allows for the pair of L-shaped tube connectors constituting the flow-rate measuring tube to be respectively connected by the connecting tube constituting the flow-rate measuring tube, as well, and for each head of the straight-pipe portion of both of the L-shaped tube connectors to be separated. If the flow-rate measuring tube is compressed in the axial direction against the elasticity of the connecting tube, then the connecting tube is compressed, so that both front-ends of the straight-pipe portion of both of the L-shaped tube connectors make contact with each other, and the base-end surface of the straight-pipe portion is compressed against the ultrasonic sensor, thus generating the biasing force. Thus, the adhesion between the flow-rate measuring tube and the ultrasonic sensor is improved, thus preventing the problem of the flow-rate measuring tube being out of the correct position or the problem of a clearance existing between the ultrasonic sensor and the L-shaped tube connector. As such, the ultrasonic waves can be efficiently propagated within the flow-rate measuring tube, thus improving the ultrasonic sensitivity. As a result, it is possible to achieve a preferable ultrasonic-flow-measuring system comprising an ultrasonic-flow meter to be able to measure accurately the liquid-flow rate by using the pair of ultrasonic sensors.

### Effects of the invention

0028 As described above, the first through eighth aspects of this invention provide for a flow-rate measuring tube for ultrasonic measuring, which is possible to manufacture easily and which does accurate ultrasonic measuring. Also, the ninth and 10th aspects of this invention provide for a transfusion tube with a preferable flow-rate measuring tube and provide for an ultrasonic-flow measuring system.

### Brief description of the drawings

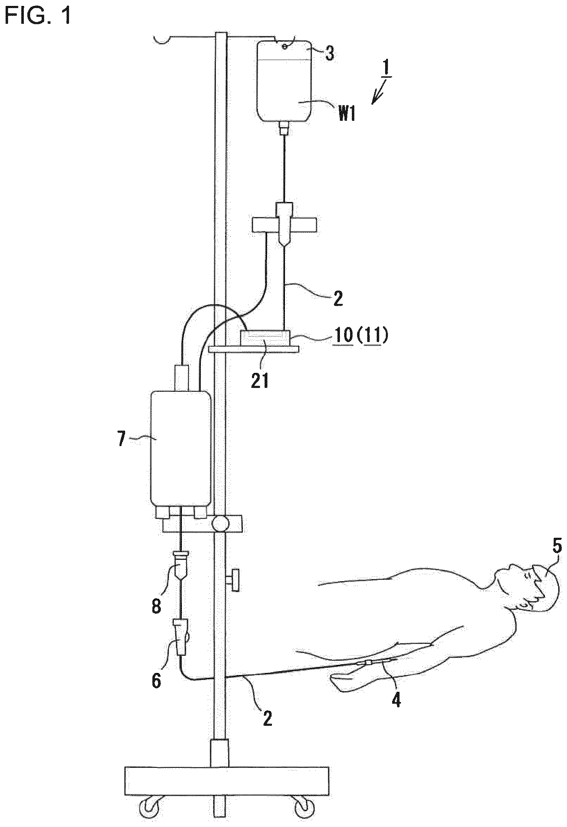

0029 FIG. 1 is a schematic diagram of the ultrasonic-flow measuring system as the embodiment of this invention.
FIG. 2 is a perspective view of the schematic configuration of the ultrasonic-flow meter as the embodiment of this invention.
FIG. 3 is a cross-sectional view of the ultrasonic-sensor unit as the embodiment of this invention.
FIG. 4 is a cross-sectional view of the flow-rate measuring tube in the state of it not being compressed in the axial direction.
FIG. 5 is a block diagram of the electrical configuration of the ultrasonic-flow meter.
FIG. 6(a) is an exploded view of the flow-rate measuring tube; FIG. 6 (b) is a side view of the flow-rate measuring tube in the state of it not being compressed in the axial direction; FIG. 6 (c) is a side view of the flow-rate measuring tube in the state of it being compressed in the axial direction.
FIG. 7 is a main-sectional view of the flow-rate measuring tube of another embodiment of this invention.
FIG. 8 is a cross-sectional view of the flow-rate measuring tube of yet another embodiment of the invention.
FIG. 9 is a cross-sectional view of the flow-rate measuring tube of yet another embodiment of the invention.
FIG. 10 is a cross-sectional view of the flow-rate measuring tube of yet another embodiment of the invention.
FIG. 11 is a cross-sectional view of the flow-rate measuring tube of yet another embodiment of the invention.

### Modes for carrying out the invention

0030 Hereinafter, one embodiment embodying the present invention of the ultrasonic-flow measuring system is described in detail in reference to the drawings.

0031 As described in FIG. 1, the embodiment of this invention as the ultrasonic-flow measuring system 1 comprises a transfusion tube 2 for the flow of the transfusion liquid W1 (liquid e.g. liquid chemical or the like). The transfusion tube 2 is a flexible transparent tube, and its outer diameter is approximately 3mm or the like. Also, the transfusion tube 2 is connected to an infusion bag 3 at the proximal end and connected to a syringe 4 at the front end. For this reason, the transfusion liquid W1 can be administered to the vein of the patient 5 or the like from the transfusion tube 2 through the syringe 4. Also, as the forming material of the transfusion tube 2, it is possible to use PVC resin (polyvinyl-chloride resin), PE resin (polyethylene resin), BDR resin (polybutadiene resin), PU resin (polyurethane resin), PO resin (polyolefin resin), PTFE resin (polytetrafluoroethylene resin) or silicone rubber or the like.

0032 Furthermore, a drip chamber 8 and a clamp 6 (adjustment knob) are installed halfway on the transfusion tube 2. The clamp 6 has a roller that is slidable in the axial direction of the transfusion tube 2. The clamp 6 switches the flow path within the transfusion tube 2 between a closed state and an open state by operating a roller. Further, the clamp 6 is configured to be able to adjust the flow speed and the flow rate of the transfusion liquid W1 in the open state according to the workload of the roller. Further, a pump device 7 that sends out the transfusion liquid W1 within the transfusion bag 3 toward the tip of the transfusion tube 2 is installed between the transfusion bag 3 and the drip-chamber 8 on the transfusion tube 2.

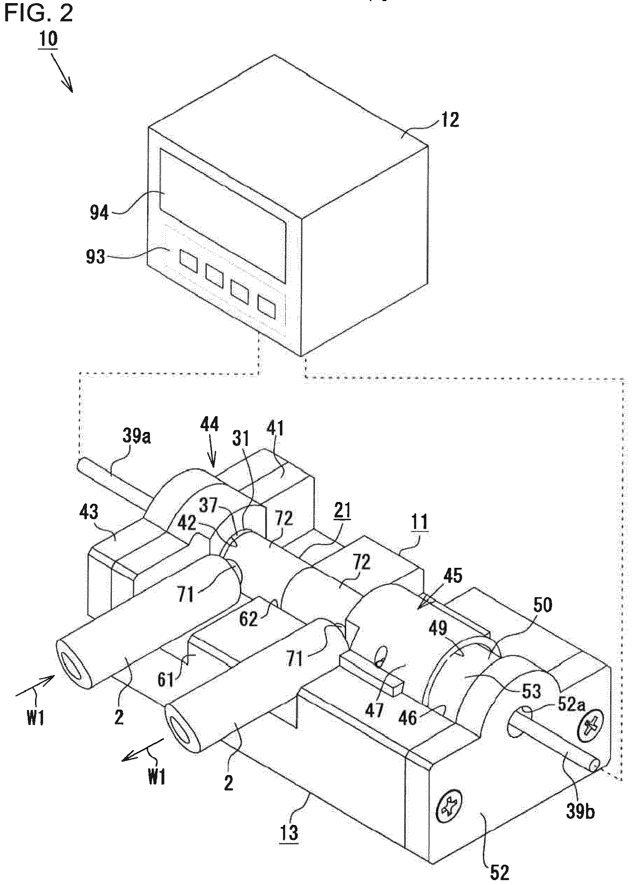

0033 As shown in FIG. 1, the ultrasonic-flow measurement system 1 comprises an ultrasonic-flow meter 10. The ultrasonic-flow meter 10 is installed between the transfusion bag 3 and the pump device 7 on the transfusion tube 2. The ultrasonic flowmeter 10 is used for measuring the flow rate of the transfusion liquid W1 flowing through the transfusion tube 2 by the ultrasonic-propagation-time difference method, for example, at a medical site. As shown in FIG. 2, the ultrasonic flowmeter 10 comprises an ultrasonic-sensor unit 11 and a measurement-control device 12.

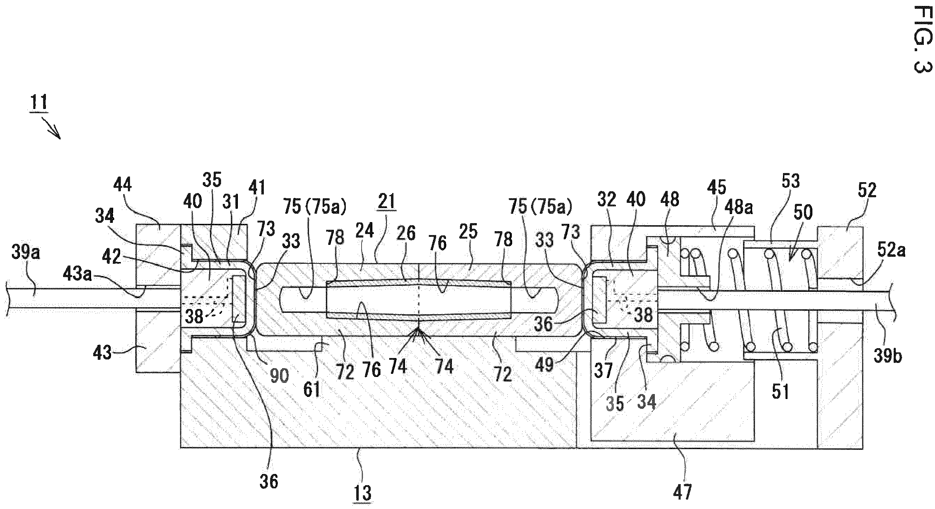

0034 As shown in FIGS. 2 and 3, the ultrasonic-sensor unit 11 comprises a flow-rate measuring tube 21 provided halfway on the transfusion tube 2; a pair of ultrasonic sensors 31 and 32; the flow-rate measuring tube 21 and a base 13 on which both ultrasonic sensors 31 and 32 are provided. Both ultrasonic sensors 31 and 32 are arranged facing each other at opposite ends of the flow-rate measuring tube 21. Specifically, the first ultrasonic sensor 31 is provided at the upper-stream position of the flow-rate measuring tube 21, and the second ultrasonic sensor 32 is provided at the lower-stream position of the flow-rate measuring tube 21. Both ultrasonic sensors 31 and 32 are sensors having the same structure. Specifically, the ultrasonic sensors 31 and 32 are small sensors having a diameter of 10mm and having a convex-curved ultrasonic-radiation surface 33 at the end. The ultrasonic sensors 31 and 32 include a cap-shaped sensor case 35 having a flange portion 34 at the base-end portion and an ultrasonic transducer 36 that is built into the sensor case 35 and is capable of transmitting and receiving ultrasonic waves. The ultrasonic transducer 36 is a piezoelectric element formed into a disk shape or into a square-plate shape or the like using piezoelectric ceramics such as piezoelectric zirconate titanate (PZT).

0035 In the sensor case 35, the vibration surface of the ultrasonic transducer 36 is bonded to the inner surface of the end portion, so that the outer surface of the end portion becomes the ultrasonic-radiation surface 33. The outer surface of the front-end portion of the sensor case 35 is covered with a rubber sheet 37. Therefore, the ultrasonic sensors 31 and 32 radiate ultrasonic waves from the ultrasonic-radiation surface 33 in a state thereof the ultrasonic-radiation surface 33 is pressed against the flow-rate measuring tube 21 by the rubber sheet 37. Also, two internal wirings 38 are connected to the ultrasonic transducers 36 of the ultrasonic sensors 31 and 32, respectively. The internal wiring 38 on the first-ultrasonic sensor 31 side is drawn from the center of the end face (base-end surface) on the base-end side of the sensor case 35 and is bound by the wiring cable 39a. Similarly, the internal wiring 38 on the second-ultrasonic sensor 32 side is also drawn from the center of the base-end surface of the sensor case 35 and is bound by the wiring cable 39b. The internal space of the sensor case 35 is filled with a resin filler 40.

0036 As shown in FIGS. 2 and 3, the base 13 is formed in a substantially rectangular-plate shape using a resin material such as ABS resin (acrylonitrile-butadiene styrene resin), and a fixed-wall portion 41 is formed at one end thereof. A housing hole 42 is provided on the fixed-wall portion 41 to penetrate the fixed-wall part 41 in the thickness direction, and the first ultrasonic sensor 31 is stored in the housing hole 42. A sensor-holding plate 43, made of a resin material such as ABS resin, is screwed to the fixed-wall part 41. The sensor-holding plate 43 holds down the first ultrasonic sensor 31 stored in the housing hole 42 from the base-end side and fixes the front-end portion (ultrasonic-radiation surface 33) of the first ultrasonic sensor 31 in the state of protruding from the housing hole 42 of the fixed-wall part 41.

0037 In the present embodiment, the sensor holder 44 is configured by the fixed-wall part 41 and the sensor-holding plate 43. The sensor holder 44 is a fixed-sensor holder that is provided so as not to move with respect to the base 13. On the other hand, a movable sensor holder 45 is movably provided at the end located on the opposite side of the fixed wall 41 in the base 13, as well as being provided along the longitudinal direction of the base 13. Specifically, a holder-storage groove 46 (see FIG. 2), extending in the longitudinal direction, is provided on the base 13, and the lower part of the sensor holder 45 is stored in the holder-storage groove 46.

0038 As shown in FIGS. 2 and 3, the sensor holder 45 includes a holder-main body 47 and a sensor-holding lid 48. The holder body 47 is formed in a substantially cylindrical shape using a resin material such as ABS resin or the like. The sensor-holding lid 48 is formed in a substantially disk shape using a resin material such as ABS resin or the like. A storage hole 49 is provided on the holder body 47, and the second ultrasonic sensor 32 is stored in the storage hole 49. The sensor-holding lid 48 holds the second ultrasonic sensor 32 stored in the housing hole 49 from the base-end side and also fixes the front-end portion (ultrasonic-radiation surface 33) of the second ultrasonic sensor 32 in a state of protruding from the storage hole 49 of the holder body 47.

0039 As shown in FIG. 3, the ultrasonic-sensor unit 11 comprises a spring unit 50 (biasing member) that biases the second ultrasonic sensor 32 toward the flow-rate measurement tube 21. The spring unit 50 presses the first ultrasonic sensor 31 against the first L-shaped tube connector 24 of the flow-rate measuring tube 21 and provides a biasing force to press the second ultrasonic sensor 32 against the second L-shaped tube connector 25 of the flow-rate measuring tube 21. The spring unit 50 comprises a coiled compression spring 51 and a side plate 52 screwed to the end surface of the base 13. Specifically, a cylindrical spring-accommodating portion 53 is projected on the side plate 52 for accommodating the proximal-end side of the compression spring 51. When the front end of the compression spring 51 that is stored in the spring-accommodating portion 53 contacts the sensor-holding lid 48, the biasing force of the compression spring 51 acts on the sensor holder 45 through the sensor-holding lid 48.

0040 As shown in FIGS. 2 and 3, a support-convex portion 61 that supports the flow-rate measuring tube 21 is provided on the upper surface of the base 13, specifically between the fixed-sensor holder 44 and the movable-sensor holder 45 (that is, between the first ultrasonic sensor 31 and the second ultrasonic sensor 32). Also, a pipe-arrangement groove 62 for accommodating a part of the flow-rate measuring pipe 21 is provided in the central portion of the support-convex portion 61.

0041 As shown in FIG. 3, the wiring cable 39a, extending from the base-end portion of the first ultrasonic sensor 31, is inserted through the through-hole 43a of the sensor-holding plate 43 and is pulled out of the ultrasonic-sensor unit 11. Then, the wiring cable 39a, pulled out of the ultrasonic unit 11, is connected to the measurement-control device 12 (see FIG. 2). Further, the wiring cable 39b, extending from the base-end portion of the second ultrasonic sensor 32, is inserted, in order, through the center hole 48a of the sensor-holding lid 48, through the inside of the compression spring 51, through the through-hole 52a of the side plate 52 and then pulled out of the ultrasonic-sensor unit 11. The wiring cable 39b, pulled out of the ultrasonic-sensor unit 11, is connected to the measurement-control device 12. That is, the ultrasonic sensors 31 and 32 are electrically connected to the measurement-control device 12 by the wiring cables 39a and 39b.

0042 Next, the flow-rate measuring tube 21 of this embodiment is described in detail.

0043 As shown in FIG. 1, the flow-rate measuring tube 21 is provided halfway on the transfusion tube 2, specifically, between the transfusion bag 3 and the pump 7. As shown in FIGS. 2 to 4, the upper-stream portion (portion on the infusion-bag 3 side) of the transfusion tube 2 is connected onto the end portion of the inlet 22 side of the flow-rate measuring tube 21. The lower stream portion (portion on the pump 7 side) of the transfusion tube 2 is connected onto the end of the outlet 23 side of the flow-rate measuring tube 21. Regarding the flow-rate measuring tube 21 as the embodiment of this invention, the transfusion liquid W1 flows from the inlet 22 toward the outlet 23.

0044 Further, the flow-rate measuring tube 21 includes a pair of L-shaped tube connectors 24 and 25 and a connecting tube 26 that connects the L-shaped tube connectors 24 and 25 to each other. The connecting tube 26 as the embodiment of this invention is formed of a transparent-resin material having elasticity. As a transparent-resin material for forming the connecting tube 26, either a polyvinyl-chloride resin, silicone rubber, a polyethylene resin, a polybutadiene resin, a polyurethane resin, a polyolefin resin, a polytetrafluoroethylene resin or the like can be used. On the other hand, the L-shaped tube connectors 24 and 25 as the embodiment of this invention are commercially available products and are formed using a transparent-resin material that is not elastically deformed. As a transparent-resin material for forming the L-shaped tube connectors 24 and 25, either an ABS resin, a PC resin (polycarbonate resin), a PET resin (polyethylene terephthalate resin) or the like can be used.

0045 As shown in FIGS. 2 to 4, both of the L-shaped tube connectors 24 and 25 are connectors (resin-elbow joints) of the same structure. Specifically, the first L-shaped tube connector 24 is connected onto the upper-stream end of the connecting tube 26 and is bent at a right angle with respect to the connecting tube 26, and it has an inflow port 22 at the end. The second L-shaped tube connector 25 is connected onto the lower-stream end of the connecting tube 26 and is bent at a right angle with respect to the connecting tube 26, and it has an outflow port 23 at the end. The flow-rate measuring tube 21 of the present embodiment is U-shaped of which the first L-shaped tube connector 24 and the second L-shaped tube connector 25 are bent in the same direction via the connecting tube 26.

0046 Both of the L-shaped tube connectors 24 and 25 respectively have a connector portion 71 onto which the end portion of the transfusion tube 2 is connected, and they have a straight-pipe portion 72 onto which the end portions of the connecting tube 26 are connected. The connector part 71 of the first L-shaped tube connector 24 has the aforementioned inflow port 22, and the connector part 71 of the second L-shaped tube connector 25 has the aforementioned outflow port 23. The inflow port 22 and outflow port 23 are tapered, with each inner diameter respectively gradually increases toward the opening end. The end portion of the transfusion tube 2 is externally fitted onto the inflow port 22 and outflow port 23.

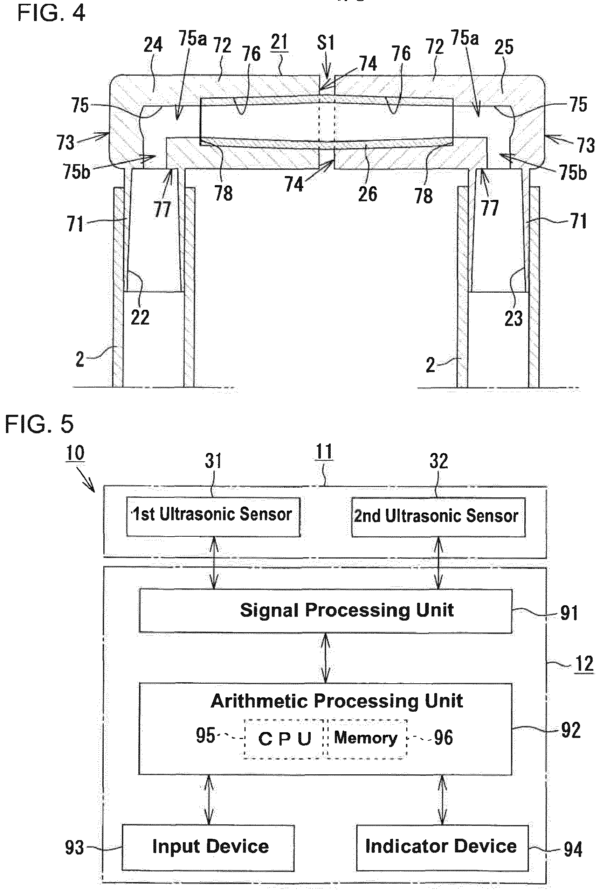

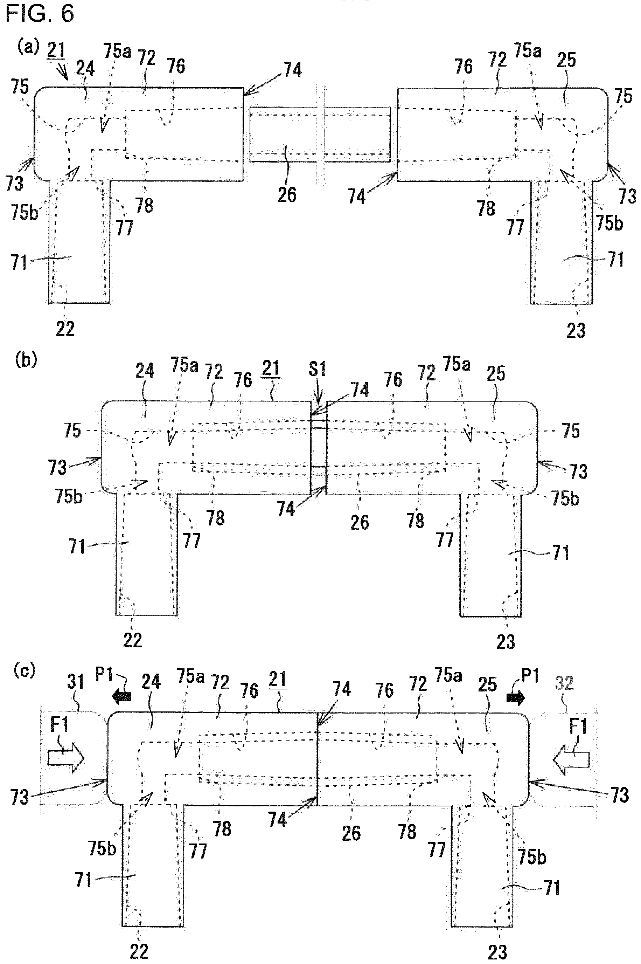

0047 As shown in FIGS. 2 to 4, the straight-pipe portion 72 has a base-end surface 73 and a front-end surface 74. The base-end surface 73 and front-end surface 74 are orthogonal to the axial direction of the straight-pipe portion 72. The base-end surface 73 of the straight-pipe portion 72 is a surface that is pressed against the ultrasonic-radiation surface 33 of the first ultrasonic sensor 31 (or the second ultrasonic sensor 32) by the rubber sheet 37. Further, a clearance S1 (see FIG. 4) is provided between the base-end surfaces 74 of the straight-pipe portions 72 of the pair of L-shaped tube connectors 24, 25. When the flow-rate measuring tube 21 is compressed in the axial direction against the elasticity of the connecting tube 26 (see FIGS. 2, 3 and 6C), the front-end surfaces 74, 74 of the straight-pipe portion 72 of both of the L-shaped tube connectors 24 and 25 make contact with each other. Then, a biasing force PI (see FIG. 6C) for pressing the base-end surface 73 against the ultrasonic sensors 31 and 32 is generated. Further, the clearance S1, which should be 1mm to 5mm in the embodiment of this invention, is preferably narrow enough to let the front-end surfaces 74, 74 of the straight-pipe portions 72 of the L-shaped tube connectors 24 and 25 to make contact with each other when the connecting tube 26 is compressed.

0048 As shown in FIGS. 3 and 4, the straight-pipe portion 72 has a through-hole 75 as a_passage for the transfusion liquid W1 and a fitting hole 76 that communicates with the through-hole 75. The through-hole 75 is made of the main passage 75a and of the sub-passage 75b orthogonal to the main passage 75a and is substantially L shaped as a whole. The inner diameter of the sub-passage 75b is less than the inner diameter of the main passage 75a. Also, the sub-passage 75b is communicated with the inflow port 22 or outflow port 23. Since the inner diameter of the sub-passage 75b is less than the inner diameter (i. e. the smallest diameter) of the inflow port 22 (or outflow port 23), a stepped surface 77 is formed at the connecting portion of the sub-passage 75b and inflow port 22 (or outflow port 23). Further, the fitting hole 76 is tapered, with the inner diameter gradually increasing toward the opening end. The ends of the connecting tube 26 are internally fitted within the fitting hole 76. The inner diameter of the main passage 75a of the through-hole 75 is less than the inner diameter (i. e. smallest diameter) of the fitting hole 76. For this reason, a stepped surface 78, to let the fitting hole 76 make contact with the open end of the connecting tube 26, is formed at the connecting portion of the main passage 75a and fitting hole 76. The length (depth) of the fitting hole 76 is slightly shorter than that of half of the length of the connecting tube 26. Further, the thickness of the connecting tube 26 is half the difference between the inner diameter of the main passage 75a and the inner diameter of the fitting hole 76. Therefore, the inner-peripheral surface of the main passage 75a and the inner-peripheral surface of the connecting tube 26 are flush with each other. To prevent a drop off, the contact surface of the connection portion of the inlet 22 and transfusion tube 2 and of the connection portion of the outlet 23 and transfusion tube 2 and of the connection portion of the fitting hole portion 76 and connecting tube 26 can be bonded together in whole or in part.

0049 Next, the electrical configuration of the ultrasonic-flow meter 10 is described.

0050 As shown in FIG. 5, the measurement-control device 12 of the ultrasonic-flow meter 10 is a device for calculating the flow rate of the transfusion liquid W1 according to the difference in propagation time of the ultrasonic waves being transmitted and received between the ultrasonic sensors 31 and 32. The measurement-control device 12 comprises a signal processing unit 91, an arithmetic-processing unit 92, an input device 93 and an indicator device 94 or the like. The signal-processing unit 91 includes a circuit that outputs a driving signal for driving the ultrasonic sensors 31 and 32 and another circuit that detects the propagation time of the ultrasonic waves or the like. The arithmetic-processing unit 92 is a processing circuit that includes a conventionally known CPU 95 and a memory 96 or the like. Control programs and data are stored in the memory 96, and the CPU 95 performs flow-rate-calculation processing and display processing based on the control programs stored in the memory 96.

0051 The input device 93 has various operation buttons and performs start/end measurement and performs display-mode setting or the like. The indication device 94 is a liquid-crystal display, for example, and indicates the flow rate being calculated by the arithmetic-processing unit 92.

0052 Next, the method for using the ultrasonic flowmeter 10 is described.

0053 For using the ultrasonic-flow meter 10, the ultrasonic-sensor unit 11 is assembled in advance. Specifically, first, in the state thereof the first ultrasonic sensor 31 is stored in the housing hole 42 provided in the fixed wall 41 of the base 13, the sensor-holding plate 43 is screwed onto the fixed wall 41 to form the fixed-sensor holder 44. A movable-sensor holder 45 is attached to the base 13. Specifically, the second ultrasonic sensor 32 is inserted into the housing hole 49 of the holder body 47. Then, the sensor holder 45 is formed by attaching the sensor-holding lid 48 to the holder-main body 47. Then, the lower part of the sensor holder 45 is stored within the holder-storage groove 46 provided in the base 13.

0054 Next, the spring unit 50 is mounted onto the base 13. Specifically, the base end of the compression spring 51 is accommodated in the spring-accommodating portion 53 of the side plate 52, and the front end of the compression spring 51 is brought into contact with the sensor-holding lid 48. Further, the side plate 52 is screwed onto the end of the base 13. At this point, the ultrasonic-sensor unit 11 is completely assembled.

0055 For using the ultrasonic-flow meter 10, the flow-rate measuring tube 21 is assembled in advance. Specifically, the upper-stream end [the left end as shown in FIG. 6(a)] of the connecting tube 26 is internally fitted into the fitting hole 76 provided within the straight-pipe portion 72 of the first L-shaped tube connector 24. Further, the lower-stream-end portion [the right end as shown in FIG. 6(a)] of the connecting tube 26 is internally fitted into the fitting hole 76 provided within the straight-pipe portion 72 of the second L-shaped tube connector 25. At this point, the flow-rate measuring tube 21 is completely assembled [see FIG. 6(b)].

0056 Next, the operator moves the sensor holder 45 to the side plate 52 (the right side as shown in FIG. 3) against the biasing force of the compression spring 51. Next, the flow-rate measuring tube 21, in the state thereof the transfusion tube 2 is connected, is stored in the piping-arrangement groove 62 provided in the base 13. Thereafter, when the operator releases the sensor holder 45, the sensor holder 45 is moved in the reverse direction (leftward as shown in FIG. 3) by the biasing force of the compression spring 51, and the second ultrasonic sensor 32, held by the sensor holder 45, is pressed against the base-end surface 73 of the straight-pipe portion 72 of the second L-shaped tube connector 25. Accordingly, the first ultrasonic sensor 31, held by the sensor holder 44, is pressed against the base-end surface 73 of the straight-pipe portion 72 of the first L-shaped tube connector 24. As a result, the flow-rate measuring tube 21 is clamped by the pair of ultrasonic sensors 31 and 32 [see FIG. 6(c)]. Further, the flow-rate measuring tube 21 is compressed in the axial direction (the direction of the arrow F1 as shown in FIG. 6C) against the elasticity of the connecting tube 26, and the front-end surfaces 74, 74 of the straight-tube portion 72 of the L-shaped tube connectors 24 and 25 are brought into contact with each other. At the same time, a biasing force PI [see FIG. 6(c)] for pressing the base-end surface 73 against the ultrasonic sensors 31, 32 is generated.

0057 Thereafter, the flow rate of the transfusion liquid W1 is measured by the ultrasonic-flow meter 10. Specifically, the signal-processing unit 91 drives the ultrasonic sensors 31 and 32, so that the ultrasonic waves are alternately propagated through the flow-rate measuring tube 21. The signal-processing unit 91 measures the ultrasonic-propagation time (propagation time of the ultrasonic waves being propagated in the same direction as the direction in which the transfusion liquid W1 flows) in the forward direction of the ultrasonic-waves being transmitted from the first ultrasonic sensor 31 and received by the second ultrasonic sensor 32. Further, the signal-processing unit 91 measures the propagation time (propagation time of ultrasonic waves being propagated in the direction opposite the direction in which the infusion W1 flows) in the reverse direction of the ultrasonic-waves being transmitted from the second ultrasonic sensor 32 and being received by the first ultrasonic sensor 31. Then, the signal-processing unit 91 outputs the forward-propagation time and reverse-propagation time to the arithmetic-processing unit 92. The arithmetic-processing unit 92 receives both the forward-direction propagation time and the reverse-direction propagation-time output from the signal-processing unit 91 and then calculates the flow speed of the transfusion liquid W1 based on the difference between the two propagation times. Next, the arithmetic-processing unit 92 calculates the flow rate of the transfusion liquid W1 by converting the calculated flow speed of the transfusion liquid W1.

0058 Then, the arithmetic-processing unit 92 outputs the calculated flow-rate data to the display device 94 and displays the flow rate of the transfusion liquid W1 onto the display screen of the display device 94. Also, the arithmetic-processing unit 92 compares the calculated-flow rate with the flow rate set by the input device 93. In the case that such flow rates are different, the arithmetic-processing unit 92 determines that the flow rate is abnormal and then controls the display device 94 to display the abnormality.

0059 Therefore, the embodiment of this invention can realize the following effects.
(1) In the ultrasonic-flow measurement system 1 as the embodiment of this invention, the flow-rate measuring tube 21 is configured by connecting a pair of L-shaped tube connectors 24 and 25 to each other via the connecting tube 26. For this reason, commercially available parts can be used for the L-shaped tube connectors 24 and 25 as the embodiment of this invention, thus making it possible to manufacture the flow-rate measuring tube 21 easily at a comparatively low cost.
   0061 In the embodiment of this invention, the connecting tube 26 is compressed by compressing the flow-rate measuring pipe 21 in the axial direction [the direction of the arrow F1 as shown in FIG. 6(c)] against the elasticity of the connecting tube 26, so that the front-end surfaces 74 of the straight-pipe portions 72 of both L-shaped tube connectors 24 and 25 are brought into contact with each other. At the same time, a biasing force PI [see FIG. 6C)] for pressing the base-end surface 73 of the straight-pipe portion 72 against the ultrasonic sensors 31 and 32 is generated. As such, the adhesion between the flow-rate measuring tube 21 and the ultrasonic sensors 31 and 32 is enhanced, thus preventing the problem of the flow-rate measuring tube 21 being displaced or the problem of there being a clearance between the ultrasonic sensors 31 and 32 and of the L-shaped tube connectors 24 and 25, thus making it possible to propagate the ultrasonic waves efficiently in the flow-rate measuring tube 21. As a result, the transmission-reception sensitivity of the ultrasonic sensors 31 and 32 is improved, so that an accurate ultrasonic measurement can be done.
(2) In this embodiment, the connection pipe 26 is connected to the L-shaped tube connectors 24 and 25 by internally fitting the end portions of the connection pipe 26 into the fitting holes 76 of the L-shaped tube connectors 24 and 25. At this time, the connecting tube 26 does not come out from the outer-peripheral surface of the straight-pipe portion 72 of the L-shaped tube connectors 24 and 25. Also, when the connecting tube 26 is compressed, the front-end surfaces 74 of the straight-pipe portions 72 of the L-shaped tube connectors 24 and 25 are brought into contact with each other, and the whole connecting tube 26 is completely stored in the fitting hole 76. As a result, the connecting tube 26 is protected by the L-shaped tube connectors 24 and 25, thus preventing the connecting tube 26 from being damaged or broken.
(3) In the embodiment of this invention, in addition to the biasing force PI being generated when the connecting tube 26 is compressed, another biasing force is generated when the compression spring 51 of the spring unit 50 is compressed, thus allowing for the base-end surface 73 of the straight-pipe portion 72 of the L-shaped tube connectors 24 and 25 to be pressed against the ultrasonic sensors 31 and 32. As a result, the adhesion between the flow-rate measuring tube 21 and the ultrasonic sensors 31 and 32 is further enhanced, so that the ultrasonic waves can be more efficiently propagated within the transfusion liquid W1 in the flow-rate measuring tube 21, thus making it possible to perform the ultrasonic measurement more accurately.
(4) In the embodiment of this invention, the front-end surface 74 of the straight-tube portion 72 of the first L-shaped tube connector 24 is orthogonal to the axial direction of the straight-tube portion 72. Also, the front-end surface 74 of the straight-tube portion 72 of the second L-shaped tube connector 25 is orthogonal to the axial direction of the straight-pipe portion 72. For this reason, when the front-end surfaces 74 of the straight-tube portions 72 of the L-shaped tube connectors 24 and 25 are brought into contact with each other, the straight-tube portions 72 are straightly connected to each other, thus being fixed without being displaced. As a result, since the ultrasonic waves having directivity propagates properly in the straight-pipe portion 72, the transmission-reception sensitivity of the ultrasonic waves is further improved, thus making it possible to perform the ultrasonic measurement more accurately.
(5) In the embodiment of this invention, the upper-stream end of the connecting tube 26 is internally fitted into the fitting hole 76 provided on the straight-pipe portion 72 of the first L-shaped tube connector 24, and the lower-stream end of the connecting tube 26 is internally fitted into the fitting hole 76 provided on the straight-pipe portion 72 of the second L-shaped tube connector 25. Furthermore, the outer-peripheral surface of the connecting tube 26 is almost entirely in contact with the inner-peripheral surface of the fitting hole 76. As a result, the connecting tube 26 is unlikely to fall out of the fitting hole 76, so that the connecting tube 26 can be connected to the L-shaped tube connectors 24 and 25 without having to use an adhesive.
(6) In the embodiment of this invention, since commercially available parts are used as the L-shaped tube connectors 24 and 25 that constitute the flow-rate measuring tube 21, the manufacturing cost is significantly reduced compared to the case of the L-shaped tube connectors 24 and 25 being manufactured by injection molding or the like. Moreover, since the same parts are used for the first L-shaped tube connector 24 and the second L-shaped tube connector 25, the unit cost of such parts are also reduced.
(7) In the embodiment of this invention, the L-shaped tube connectors 24 and 25 and the connecting tube 26 constituting the flow-rate measuring pipe 21 are formed of a transparent-resin material. For this reason, when the flow-rate measuring tube 21 is attached to the ultrasonic-sensor unit 11, the transfusion liquid W1 flowing into the flow-rate measuring tube 21 can be visually confirmed.

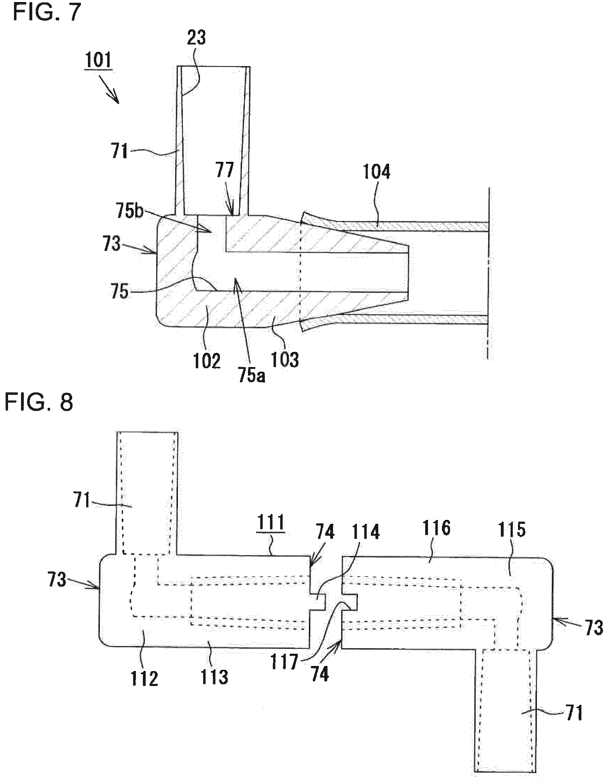

0068 The aforementioned embodiments can be modified as described below.
0 069 • In the flow-rate measuring tube 21 of the above embodiment, the end of the connecting tube 26 is internally fitted into the fitting hole 76 of the L-shaped tube connectors 24 and 25. However, as shown in FIG. 7 of the flow-rate measurement tube 101, the end portion of the connecting tube 104 can be externally fitted onto the straight-tube portion 103 of the L-shaped tube connector 102. Furthermore, as shown in FIG. 7, the straight-pipe portion 103 may be tapered such that the outer diameter gradually decreases toward the end. In this way, when the end of the connecting tube 104 is externally fitted onto the straight-pipe portion 103, the end of the connecting tube 104 is gradually pressed and expanded from the inside, so that it is unnecessary to expand manually the end of the connecting tube 104, thus making it easy to connect the connecting tube 104 to the straight-pipe portion 103.
0 070 • As shown in FIG. 8 of the flow-rate measuring tube 111, it is possible to form a fitting- protruded portion 114 on the front-end outer periphery of the straight-tube portion 113 provided on the first L-shaped tube connector 112 and to form a fitting-recessed portion 117 to be engaged with the fitting-convex portion 114 on the front-end outer periphery of the straight-pipe portion 116 provided on the second L-shaped tube connector 115. As such, the fitting-convex portion 114 is engaged with the fitting-recess portion 117, so that the pair of L-shaped tube connectors 112 and 115 can be positioned respectively. Also, the L-shaped tube connectors 112 and 115 are prevented from being displaced in a circumferential direction, thus preventing the connecting tube 26 that connects the L-shaped tube connectors 112 and 115 to each other from being twisted. Furthermore, the shape, number, etc. of the fitting-convex portion 114 and of the fitting recess 117 is not particularly limited.

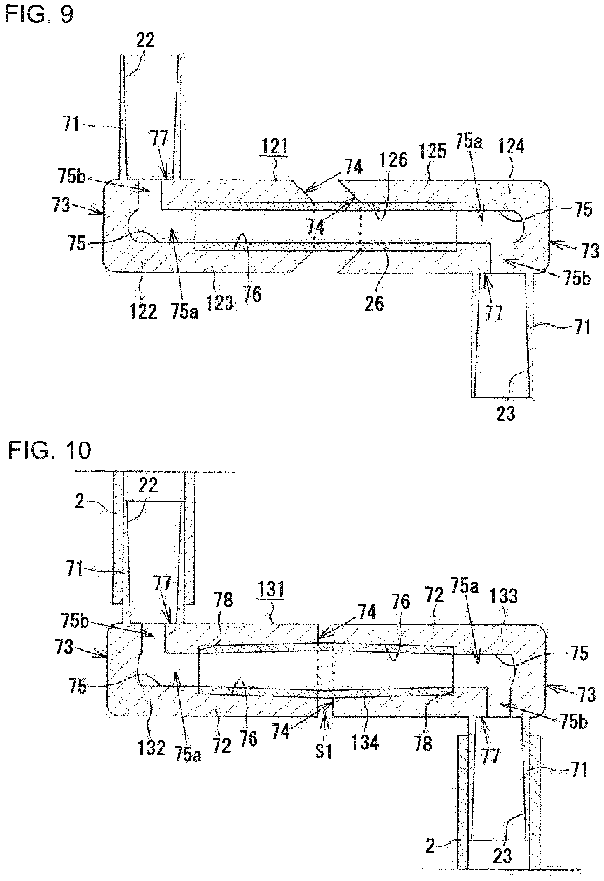

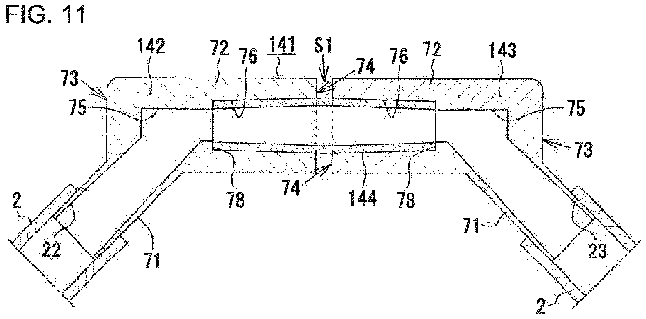

0071 Further, as shown in FIG. 9 of the flow-rate measuring tube 121, the front-end portion of the straight-tube portion 123 of the first L-shaped tube connector 122 can be tapered, so that the outer diameter gradually decreases toward the front end. At the same time, the opening of the fitting hole 126 of the straight-pipe portion 125, provided on the second L-shaped tube connector 124, can also be tapered such that the inner diameter gradually increases toward the open end. Even in this case, the pair of L-shaped tube connectors 122 and 124 can be positioned respectively by engaging one straight-pipe portion 123 with the other straight-pipe portion 125.
0 072 • The flow-rate measuring tube 21 as the embodiment of this invention is substantially U-shaped of which the first L-shaped tube connector 24 and the second L-shaped tube connector 25 are bent in the same direction via the connecting tube 26. However, it is not limited to this. Specifically, as shown in FIGS. 8 to 10, the flow-rate measuring tubes 111, 121, 131 may be crank shaped of which the first L-shaped tube connectors 112, 122, 132 and the second L-shaped tube connectors 115, 124, 133 are bent at a right angle in the opposite direction respectively via the connecting tube 26, 134. Also, as shown in FIG. 11, the flow-rate measuring tube 141 may have a shape (substantially a trapezoid shape) of which the first L-shaped tube connector 142 and the second L-shaped tube connector 143 are bent at an obtuse angle in the same direction via the connecting tube 144.
0 073 • In the above embodiment, the base-end surfaces 73 of the straight-pipe portions 72 provided on the L-shaped tube connectors 24 and 25 are pressed against the ultrasonic sensors 31, 32 by the biasing force P1 that is generated when the connecting tube 26 is compressed and by another biasing force that is generated when the compression spring 51 of the spring unit 50 is compressed. However, the base-end surface 73 of the straight-pipe portion 72 without the spring unit 50 may be pressed against the ultrasonic sensors 31 and 32 only by the biasing force P1 being generated when the connecting tube 26 is compressed.
0 074 • In the above embodiment, the ultrasonic-flow meter 10 is installed at a position between the transfusion bag 3 and the pump device 7 of the transfusion tube 2. However, it is possible to install the ultrasonic-flow meter 10 at a position between the pump device 7 and the drip chamber 8 of the transfusion tube 2.
0 075 • The flow-rate measuring tube 21 for the ultrasonic-flow meter 10 of the above embodiment is used for measuring the flow-rate of the transfusion liquid W1 flowing within the transfusion tube 2. However, it is possible to use it for measuring the flow-rate of a blood circuit of an artificial dialysis, for example. Also, it is possible to use the flow-rate measuring tube 21 for measuring the flow-rate of chemicals, adhesives, paints or pastes or the like in a factory.

0076 Besides the technical ideas described about this invention, other technical ideas to be understood about the described embodiments, above, are hereinafter described.
(1) A flow-rate measuring tube for measuring the ultrasonic-flow rate according to any one of the first through eighth aspects of this invention, characterized in that the pair of the L-shaped tube connectors and the connecting tube are formed of a transparent-resin material.
(2) A flow-rate measuring tube for measuring the ultrasonic-flow rate according to any one of the first through eighth aspects of this invention, characterized in that the L-shaped tube connector is formed of a material that does not elastically deform.
(3) A flow-rate measuring tube for measuring the ultrasonic-flow rate according to any one of the first through eighth aspects of this invention, characterized in that the L-shaped tube connector is a commercially available product.
(4) An ultrasonic-flow measuring system according to the 10th aspect of this invention, characterized in that the ultrasonic-flow meter comprises a biasing member that applies a biasing force for pressing the ultrasonic sensor against the L-shaped tube connector.

### Description of the reference numerals

0081
- 1:: Ultrasonic-flow measuring system
- 2:: Transfusion tube
- 10:: Ultrasonic-flow meter
- 21, 101, 111, 121, 131, 141:: Flow-rate measuring tube
- 24, 112, 122, 132, 142:: First L-shaped tube connector as the L-shaped tube connector
- 25, 115, 124, 133, 143:: Second L-shaped tube connector as the L-shaped tube connector
- 26, 104, 134, 144:: Connecting tube
- 31:: First ultrasonic sensor as the ultrasonic sensor
- 32:: Second ultrasonic sensor as the ultrasonic sensor
- 72, 103, 113, 116, 123, 125:: Straight-pipe portion
- 73:: Base-end surface of the straight-pipe portion
- 74:: Front-end surface of the straight-pipe portion
- 75:: Through-hole
- 76, 126:: Fitting hole
- 78:: Stepped surface
- 114:: Fitting-protruded portion
- 117:: Fitting-recessed portion
- S1:: Clearance
- W1:: Transfusion liquid as the liquid

## Claims

1. A flow-rate measuring tube provided halfway on a transfusion tube for the use of measuring the liquid-flow rate based on the difference in the propagation time of the ultrasonic waves that are emitted and received between the pair of ultrasonic sensors, **characterized in that** the flow-rate measuring tube is made of a pair of L-shaped tube connectors and of a connecting tube to connect the pair of L-shaped tube connectors; thereof the connecting tube has an elasticity with a pair of L-shaped tube connectors respectively having a straight-pipe portion to be connected to the end of the connecting tube; and the base-end surface of the straight-pipe portion of the pair of L-shaped tube connectors is a surface to be pressed against the pair of ultrasonic sensors, and a clearance is formed between the front-end surfaces of the straight-pipe portion of the pair of L-shaped tube connectors.

2. A flow-rate measuring tube according to the first aspect of this invention, **characterized in that** the L-shaped tube connector has a through-hole to form a pathway for the liquid flow and has a fitting hole that communicates to the through-hole, and that the end of the connecting tube is internally fitted.

3. A flow-rate measuring tube according to the second aspect of this invention, **characterized in that** the fitting hole is tapered such that the inner diameter of the fitting hole gradually increases toward the open end of the fitting hole.

4. A flow-rate measuring tube according to the second and third aspects of this invention, **characterized in that** a stepped surface is formed on the connection between the through-hole and the fitting hole, so that the open end of the connecting tube that is fitted into the fitting hole makes contact with the stepped surface.

5. A flow-rate measuring tube according to the first aspect of this invention, **characterized in that** the end of the connecting tube is externally fitted onto the straight-pipe portion.

6. A flow-rate measuring tube according to the fifth aspect of this invention, **characterized in that** the straight-tube portion is tapered such that the outer diameter of the straight-pipe portion gradually decreases toward the front end of the straight-tube portion

7. A flow-rate measuring tube according to any one of the first through sixth aspects of this invention, **characterized in that** in the state of the flow-rate measuring tube being compressed in the axial direction against the elasticity of the connecting tube, the ends of the straight-pipe portion of the pair of L-shaped tube connectors connect together, thus generating a biasing force for compressing the base-end surface of such straight-pipe portion against the ultrasonic sensor.

8. A flow-rate measuring tube according to any one of the first through seventh aspects of this invention, **characterized in that** a fitting-protruded portion is formed at the front end of the outer periphery of the straight-pipe portion of one of the L-shaped tube connectors and a fitting-recessed portion is provided at the front end of the outer periphery of the straight-pipe portion of the other L-shaped tube connector, so that the fitting-protruded portion is fitted to the-fitting-recessed portion.

9. A transfusion tube with a flow-rate measuring tube, according to any one of the first through eighth aspects of this invention, **characterized in that** a flow-rate measuring tube is provided halfway on the transfusion tube.

10. An ultrasonic flow-rate measuring system, **characterized in** comprising a transfusion tube with a flow-rate measuring tube, according to the ninth aspect of this invention, and an ultrasonic-flow meter that measures the liquid-flow rate based on the difference in the propagation time of the ultrasonic waves that are being emitted and received between the pair of ultrasonic sensors oppositely placed on the upper-stream and on the lower-stream positions of the flow-rate measuring tube.
